# EUROPÄISCHE PATENTANMELDUNG

(11) **EP 2 098 959 A2**
(43) Veröffentlichungstag der Anmeldung: **09.09.2009**
(21) Anmeldenummer: 09153490.9
(22) Anmeldetag: 24.02.2009
(51) Int. Cl.: G06F 11/16, G06F 11/18

(54) **Rechnerkonfiguration zur Hardware-Kopplung von drei Vorverarbeitungsbaugruppen mit zwei Rechnerkanälen eines sicheren Rechners**

(30) Priorität: 06.03.2008 DE 102008013339
(71) Anmelder: Siemens Aktiengesellschaft, 80333 München (DE)
(72) Erfinder: Kendelbacher, Dr. Detlef, 13129, Berlin (DE); Liebscher, Dr. Matthias, 10318, Berlin (DE); Stein, Fabrice, 12621, Berlin (DE)

(57) **Zusammenfassung**

Die Erfindung betrifft eine Rechnerkonfiguration zur Hardware-Kopplung von drei Vorverarbeitungsbaugruppen (V1, V2, V3), insbesondere Sensoren, mit zwei Rechnerkanälen (A, B) eines sicheren Rechners. Um höchste Anforderungen hinsichtlich Sicherheit, Verfügbarkeit und Echtzeitfähigkeit zu erfüllen, ist vorgesehen, dass die Vorverarbeitungsbaugruppen (V1, V2, V3) Datenschnittstellen (SERIF, BUSIF) und Synchronisationseingänge (1/T-SYNC) aufweisen, welche mit Datenschnittstellen (IF1, IF2) und Synchronisationsschnittstellen (01, 02; I1, 01) der beiden Kanäle (A, B) derart verbunden sind, dass auch bei Ausfall einer beliebigen Vorverarbeitungsbaugruppe (V1, V2, V3) für die Verarbeitung im sicheren Rechner immer die Ergebnisse von mindestens zwei Vorverarbeitungsbaugruppen (V1, V2, V3) unter Beteiligung von beiden Kanälen (A, B) des sicheren Rechners zur Verfügung stehen.

## Beschreibung

Die Erfindung betrifft eine Rechnerkonfiguration zur Hardware-Kopplung von drei Vorverarbeitungsbaugruppen, insbesondere Sensoren, mit zwei Rechnerkanälen eines sicheren Rechners.

Rechnerkonfigurationen für sicherheitskritische Anwendungen sind oft so aufgebaut, dass die Verarbeitung in mindestens zwei unterschiedlichen und unabhängigen Rechnerkanälen parallel erfolgt und die Ergebnisse der Rechnerkanäle miteinander verglichen werden, bevor eine Ausgabe an den zu steuernden Prozess erfolgt.

Sicherheitsanforderungen werden nicht nur an die Verarbeitung innerhalb des sicheren Rechners gestellt, sondern auch an die Kommunikation des sicheren Rechners mit der Prozessperipherie. So kann beispielsweise eine Notwendigkeit darin bestehen, Sensordaten mehrkanalig einzulesen, um Fehler der Hardware oder der Datenübertragung aufdecken zu können.

Neben den Sicherheitsanforderungen bestehen für sichere Systeme meistens auch hohe Verfügbarkeitsanforderungen. Demzufolge müssen diese Systeme so redundant ausgelegt werden, dass bei Ausfall einer oder mehrerer Komponenten die Prozesssteuerung fortgesetzt werden kann. Deshalb sind sichere Systeme nach dem Stand der Technik oft drei- oder vierkanalig aufgebaut.

Eine spezielle Konfiguration für sicherheitskritische Systeme ist die Kopplung eines zweikanaligen sicheren Rechners mit drei Vorverarbeitungsbaugruppen oder Sensoren - 2:3-Kopplung -). An die Vorverarbeitungsbaugruppen oder Sensoren sollen dabei keine oder nur geringe Sicherheitsanforderungen gestellt werden. Die Integration dieser Komponenten soll möglichst unter Beibehaltung der verfügbaren Schnittstellen und Datenübertragungsprotokolle erfolgen können. Unter diesen Randbedingungen können marktübliche Komponenten für sicherheitskritische und hochverfügbare Systeme verwendet werden und teure Spezialentwicklungen vermieden werden.

Ein Beispiel für die Anwendung einer 2:3-Kopplung ist eine sicherheitskritische Ortungsfunktion innerhalb eines Zugbeeinflussungssystems. Die sichere Fahrzeugortung läuft in einem zweikanaligen sicheren Fahrzeugrechner. An den sicheren Fahrzeugrechner sind drei nichtsichere Vorverarbeitungsbaugruppen gekoppelt, die ihrerseits jeweils mit mindestens zwei Sensoren für die Weg- und Geschwindigkeitsmessung ausgerüstet sind. In den Vorverarbeitungsbaugruppen werden die Sensordaten ausgewertet und die Prozessgrößen Weg und Geschwindigkeit ermittelt. Außerdem erfolgt eine Bewertung der Qualität der Sensordaten und der Genauigkeit der Ergebnisse. Die Vorverarbeitungsbaugruppen liefern unabhängig voneinander ihre Ergebnisse an den sicheren Fahrzeugrechner. Im sicheren Rechner erfolgt die Bewertung der Vertrauenswürdigkeit der gelieferten Ergebnisse und deren weitere Nutzung im Steuerungsprozess. Bei Ausfall eines Sensors oder einer Vorverarbeitungsbaugruppe arbeitet das System unterbrechungsfrei mit den verbleibenden Komponenten weiter.

Für die 2:3-Kopplung wird eine Hardwareschaltung benötigt, die den Anforderungen an ein sicherheitskritisches System gerecht wird. Demzufolge müssen die Ausgaben der Vorverarbeitungsbaugruppen bzw. Sensoren mit dem sicheren Rechner so verschaltet werden, dass in jedem Kanal des sicheren Rechners unabhängig davon, ob eine beliebige Vorverarbeitungsbaugruppe ausgefallen ist, gültige Ergebnisse von mindestens zwei Vorverarbeitungsbaugruppen bzw. Sensoren verfügbar sind. Weiterhin ist es für Echtzeitanwendungen nötig, die Vorverarbeitungsbaugruppen bzw. Sensoren mit dem sicheren Rechner zu synchronisieren. Auch dafür ist eine Verschaltung notwendig.

Während des Betriebes einer 2:3-Kopplung können verschiedene Fehler auftreten, die offenbart werden müssen, um die Sicherheitsanforderungen erfüllen zu können. Diese sind insbesondere:
- systematische Hard- oder Softwarefehler in den Vorverarbeitungsbaugruppen oder Sensoren,
- Fehler bei der Datenübertragung zwischen Vorverarbeitungsbaugruppe bzw. Sensor und sicherem Rechner,
- Fehler beim Einlesen der Daten im sicheren Rechner und
- Synchronisationsfehler, die sich durch zeitlichen Versatz der Verarbeitung in den Vorverarbeitungsbaugruppen bzw. Sensoren ergeben.

Auf weitere Fehlermöglichkeiten bei der Verarbeitung und Ausgabe im sicheren Rechner soll hier nicht eingegangen werden.

Für sicherheitskritische Anwendungen ist es vorteilhaft, diversitäre Vorverarbeitungsbaugruppen anzuwenden, da dadurch das Risiko für systematische Fehler reduziert wird. Andererseits können auch mehrere gleichartige Vorverarbeitungsbaugruppen eingesetzt werden, wenn deren Entwicklung unter hohen Qualitätsanforderungen erfolgt.

Die Aufgabe der Erfindung besteht darin, für die 2:3-Kopplung eine technisch vorteilhafte Lösung vorzuschlagen, die hohen Anforderungen hinsichtlich signaltechnischer Sicherheit, Verfügbarkeit und Echtzeitfähigkeit genügt.

Erfindungsgemäß wird die Aufgabe dadurch gelöst, dass die Vorverarbeitungsbaugruppen Datenschnittstellen und Synchronisationseingänge aufweisen, welche mit Datenschnittstellen und Synchronisationsschnittstellen der beiden Kanäle des sicheren Rechners derart verbunden sind, dass auch bei Ausfall einer beliebigen Vorverarbeitungsbaugruppe für die Verarbeitung im sicheren Rechner immer die Ergebnisse von mindestens zwei Vorverarbeitungsbaugruppen unter Beteiligung von beiden Kanälen des sicheren Rechners zur Verfügung stehen. Auf diese Weise können Verarbeitungsfehler zwischen Vorverarbeitungsbaugruppen und sicherem Rechner und Fehler beim Einlesen der Vorverarbeitungsergebnisse im sicheren Rechner durch den sicheren Rechner erkannt werden.

Die erfindungsgemäße Rechnerkonfiguration zur 2:3-Kopplung erlaubt die Verbindung von dreikanaligen Vorverarbeitungsbaugruppen, beispielsweise Sensoren, mit zweikanalig arbeitenden sicheren Rechnern, wobei folgende Anforderungen erfüllt werden:
- höchste Sicherheit, so dass sicherheitskritische Anwendungen zulassungsfähig sind,
- Redundanz, so dass der Ausfall einer Vorverarbeitungsbaugruppe oder einer Rechnerkopplung nicht verfügbarkeitseinschränkend wirkt und
- Echtzeitfähigkeit, so dass eine Eignung für Prozesssteuerungen mit Echtzeitanforderungen gegeben ist.

Die geringen Anforderungen an die Vorverarbeitungsbaugruppen bzw. Sensoren ermöglichen die Verwendung von marktüblichen Komponenten und Schnittstellen. So können Systeme verschiedener Hersteller, die unabhängig voneinander entstanden sind, im Rahmen von sicherheitskritischen Anwendungen miteinander gekoppelt werden.

Die 2:3-Kopplung kann sowohl für seriell Punkt-zu-Punkt- angekoppelte Vorverarbeitungsbaugruppen bzw. Sensoren, als auch für Buskopplung eingesetzt werden. Bei leistungsfähiger Buskopplung kann auf eine zusätzliche Verschaltung zur Synchronisierung verzichtet werden. Die Algorithmen und Wirkungsweise der 2:3-Kopplung sind unabhängig von der verwendeten Punkt-zu-Punkt- oder Bus-Kopplung.

Die Inhalte der mittels 2:3-Kopplung übertragenen Daten, deren Format und die verwendeten Übertragungsprotokolle sind nach Bedarf frei wählbar.

Die Synchronisation zwischen Rechner und Peripherie ist einfach und robust. Es sind keine aufwändigen Algorithmen zur Synchronisierung der Systemzeiten der drei Vorverarbeitungsbaugruppen und des sicheren Rechners notwendig.

Die erfindungsgemäße 2:3-Kopplung ermöglicht zusätzlich eine echtzeitfähige Resynchronisation bzw. Rekonfiguration der Vorverarbeitungsbaugruppen bzw. Sensoren zu beliebigen zurückliegenden oder zukünftigen Zeitpunkten unter Sicherheitsverantwortung während der Laufzeit des Systems.

Mit der Anwendung der Verschaltung gemäß 2:3-Kopplung können zusätzliche aufwendige Softwarelösungen zur Fehleroffenbarung der Vorverarbeitungsergebnisse entfallen. Zur Absicherung der Datenintegrität der Übertragung kann zusätzlich eine einfache zyklische Prüfsumme angewendet werden.

Vorteilhafte Ausführungsformen ergehen sich aus in den Unteransprüchen und der nachfolgenden Figurenbeschreibung.

Es zeigen:
- Figur 1: eine Rechnerkonfiguration für Punkt-zu- Punkt-Kopplung zwischen drei Vorverarbei- tungsbaugruppen und einem zweikanaligen sicheren Rechner,
- Figuren 2 und 3: Rechnerkonfigurationen für Bus-Kopplung zwischen drei Vorverarbeitungsbaugruppen und einem zweikanaligen sicheren Rechner,
- Figur 4: Prozessdateninterface im sicheren Rech- ner,
- Figur 5: Datenflüsse im Prozessdateninterface des sicheren Rechners,
- Figuren 6 bis 9: Datenverarbeitungsprozesse zur Auswertung der Daten des Prozessdateninterfaces.

Der Begriff der Vorverarbeitungsbaugruppe steht nachfolgend stellvertretend für beliebige Baugruppen, Vorverarbeitungsrechner oder Sensoren, die geeignete Schnittstellen für die 2:3-Kopplung besitzen und deren Mess- oder Verarbeitungsergebnis Input für den sicheren Rechner darstellt.

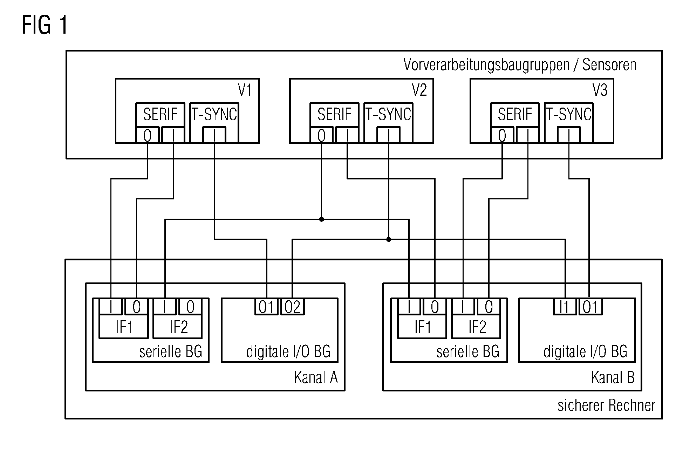

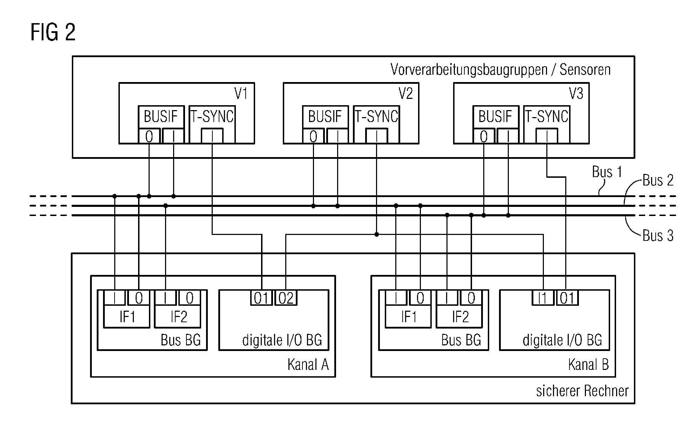

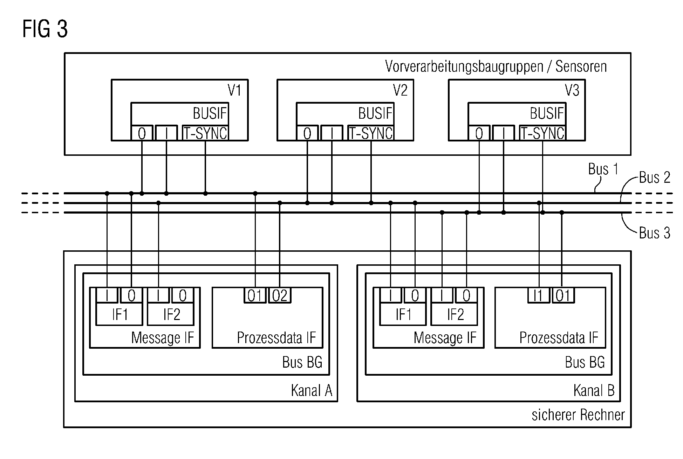

Die in Figur 1 veranschaulichten Vorverarbeitungsbaugruppen V1, V2 und V3 haben mindestens eine Schnittstelle für die Datenübertragung - Datenschnittstelle SERIF - und für die Synchronisation - Sync-Schnittstelle T-SYNC. Über die Datenschnittstelle SERIF erfolgt sowohl die Ausgabe der Daten an einen sicheren Rechner - Output O, als auch die Eingabe von Daten des sicheren Rechners - Input I. Über die Sync-Schnittstelle T-SYNC steuert der sichere Rechner den Zeitpunkt der Datengenerierung in den Vorverarbeitungsbaugruppen V1, V2 und V3. Die verwendete Hardwarekopplung ist abhängig von der Art der Verbindung. Werden Punkt-zu-Punkt Verbindungen eingesetzt, wie beispielsweise bei seriellen Schnittstellen SERIF, erfolgt die Kopplung gemäß Figur 1. Bei der Verwendung von Busschnittstellen BUSIF ist eine Kopplung gemäß Figur 2 oder 3 vorgesehen.

Kennzeichnend für die Verschaltung zwischen den Vorverarbeitungsbaugruppen V1, V2 und V3 und dem sicheren Rechner ist, dass die Datenschnittstellen - Output O - von zwei V1 und V3 der drei Vorverarbeitungsbaugruppen V1, V2 und V3 mit jeweils einer Datenschnittstelle - Input I - eines der beiden Rechnerkanäle A und B des sicheren Rechners gekoppelt sind. Die Datenschnittstelle - Output O - der dritten Vorverarbeitungsbaugruppe V2 wird hingegen an die Datenschnittstellen - Input I - beider Rechnerkanäle A und B gekoppelt. Der Output O der dritten Vorverarbeitungsbaugruppe V2 wird parallel mit Dateneingängen I beider Rechnerkanäle A und B verschaltet, so dass Ausgaben dieser Vorverarbeitungsbaugruppe V2 von beiden Rechnerkanälen A und B eingelesen werden. Der Dateneingang I dieser Vorverarbeitungsbaugruppe V2 wird dagegen mit dem Datenausgang O von nur einem Rechnerkanal B gekoppelt, so dass die Vorverarbeitungsbaugruppe V2 mit den Ausgaben dieses Rechnerkanals B versorgt wird.

Infolge dieser Verschaltung werden bei Ausfall von jeweils einer beliebigen Vorverarbeitungsbaugruppe V1, V2 oder V3 die Daten der beiden übrigen Vorverarbeitungsbaugruppen immer über beide Kanäle A und B des sicheren Rechners eingelesen, wodurch eine zweikanalige sichere Verarbeitung weiterhin möglich ist.

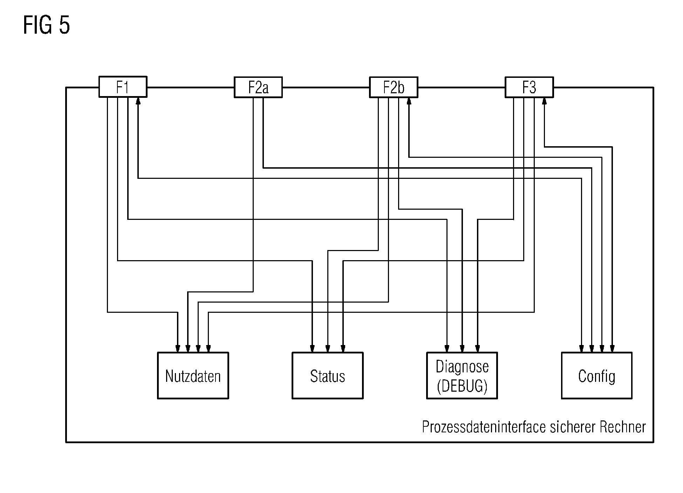

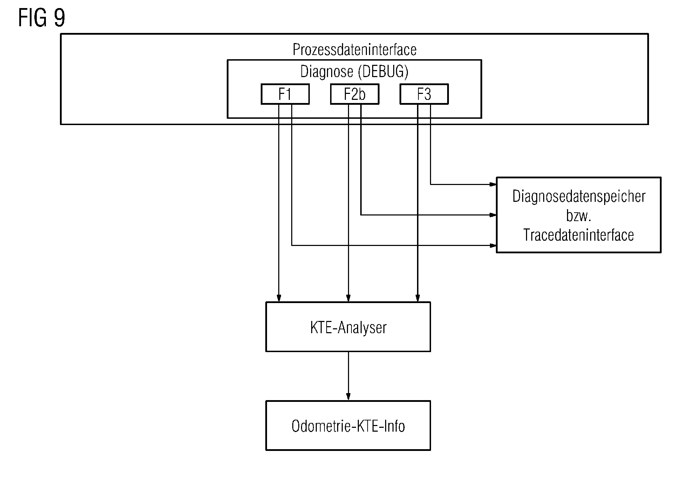

Über die Datenschnittstelle SERIF bzw. BUSIF und O/I der Rechnerkanäle A und B werden gemäß Figur 5 folgende Arten von Daten ausgetauscht:
a) Konfigurationsdaten CONFIG: Diese Daten werden vom sicheren Rechner an die Vorverarbeitungsbaugruppen V1, V2 und V3 übermittelt. Die Daten dienen der Einstellung der Vorverarbeitungsbaugruppen V1, V2 und V3. Beispielsweise können Kalibrierungsdaten an Sensoren ausgegeben werden. Die Konfiguration kann vor der Inbetriebnahme des Systems und bei Bedarf auch zur Systemlaufzeit, z.B. bei Resynchronisation einer Wegmessung durch Referenzpunkte, erfolgen. Bei sicherheitsrelevanten Anwendungen ist es meistens notwendig, die korrekte Konfiguration der Vorverarbeitungsbaugruppen V1, V2 und V3 zu prüfen. Deshalb ist vorgesehen, die in den Vorverarbeitungsbaugruppen V1, V2 und V3 tatsächlich eingestellten Konfigurationsdaten CONFIG zurück an den sicheren Rechner zu übermitteln und von diesem auf Übereinstimmung prüfen zu lassen. Die erfolgreiche Prüfung kann als Bedingung für die weitere Systemfunktion verwendet werden.
b) Nutzdaten: Die Übertragung der Nutzdaten erfolgt von den Vorverarbeitungsbaugruppen V1, V2 und V3 zum sicheren Rechner. Sie beinhalten die Ergebnisse der Vorverarbeitung oder Sensorik. Die Nutzdaten sind sicherheitsrelevant und müssen deswegen mehrkanalig übertragen werden.
c) Statusdaten STATUS: Statusdaten werden von den Vorverarbeitungsbaugruppen V1, V2 und V3 zum sicheren Rechner übertragen. Sie enthalten Informationen zum Zustand der Vorverarbeitungsbaugruppe V1, V2 und V3, wie beispielsweise Ausfallzustand. Die Statusdaten können verwendet werden, um eine angepasste Auswertung der Nutzdaten - Fusion - im sicheren Rechner in Abhängigkeit vom aktuellen Verarbeitungsstatus zu realisieren - fehlerabhängige Fusionslogik. An die Statusdaten werden keine Sicherheitsanforderungen gestellt.
d) Diagnosedaten DIAGNOSE: Die Daten werden von den Vorverarbeitungsbaugruppen V1, V2 und V3 an den sicheren Rechner oder eine spezielle Diagnoseverarbeitungskomponente (Figur 9) übertragen. Sie dienen der Fehleranalyse und Bereitstellung von Debuginformationen. Es werden keine Sicherheitsanforderungen an diese Daten gestellt.

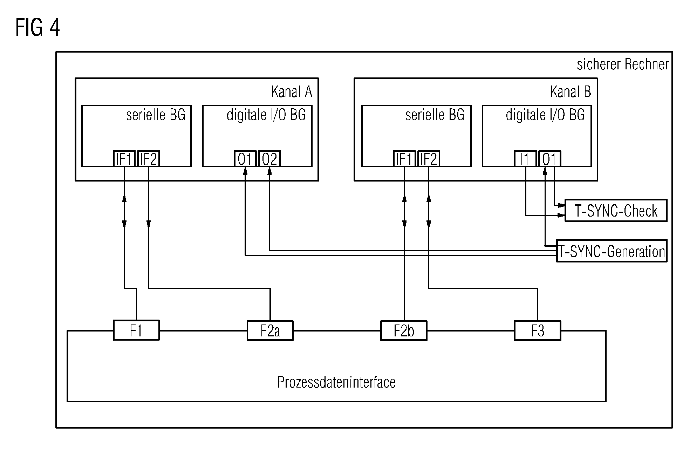

Zu den spezifischen Funktionen eines sicheren Rechners gehört es, die I/O-Daten der beiden Rechnerkanäle A und B fortlaufend zu vergleichen, um Fehler in der Verarbeitung eines Rechnerkanals A oder B aufdecken zu können. Für diesen Zweck werden die Input-Daten zwischen den Rechnerkanälen A und B gespiegelt. Damit werden in jedem Rechnerkanal A, B die Eingänge beider Rechnerkanäle A und B sichtbar. Infolge der 2:3-Kopplung mit der erfindungsgemäßen Verschaltung entsteht nach der Spiegelung der Rechnerkanäle in beiden Kanälen A, B des sicheren Rechners ein Prozessdateninterface mit vier Schnittstellen F1, F2a, F2b und F3, wie in den Figuren 4 und 5 veranschaulicht. Von diesen vier Schnittstellen F1, F2a, F2b und F3 arbeiten drei Schnittstellen F1, F2b, F3 lesend und schreibend, während die vierte Schnittstelle F2a nur lesend arbeitet.

Die Nutzdaten der drei Vorverarbeitungsbaugruppen V1, V2 und V3 werden an allen vier Schnittstellen F1, F2a, F2b und F3 des Prozessdateninterfaces im sicheren Rechner bereitgestellt. Die Nutzdaten der ersten Vorverarbeitungsbaugruppe V1 werden auf die erste Schnittstelle F1 abgebildet. Die Nutzdaten der zweiten Vorverarbeitungsbaugruppe V2 erscheinen in den Schnittstellen F2a und F2b. Die Nutzdaten der dritten Vorverarbeitungsbaugruppe V3 treffen über die vierte Schnittstelle F3 ein.

Fällt beispielsweise die Vorverarbeitungsbaugruppe V1 aus, können die Nutzdaten der Vorverarbeitungsbaugruppen V2 und V3 weiterhin über die Schnittstellen F2a und F3 mehrkanalig eingelesen und verarbeitet werden.

Status- und Diagnosedaten werden wie Figur 5 zeigt über die drei Schnittstellen F1, F2b und F3 des Prozessdateninterfaces an den sicheren Rechner übertragen. Die Daten werden nach der Bereitstellung am Prozessdateninterface kanalindividuell inhaltlich separiert.

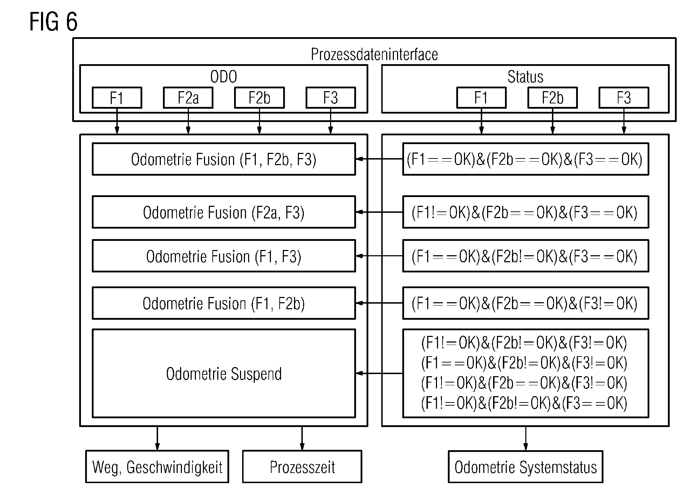

Statusdaten können für die Steuerung der weiteren Prozessverarbeitung - Fusion - der Nutzdaten herangezogen werden, wie Figur 6 zeigt.

Aus Diagnosedaten lassen sich Informationen über ausgefallene Komponenten - KTE-Diagnose (Figur 9) - oder notwendige Wartungsmaßnahmen ableiten. Debug- und Tracedaten dienen der Fehleranalyse und Aufzeichnung des Prozesszustandsverlaufes und werden nach Erfordernis in einem entsprechend dimensionierten Speichermedium abgelegt oder an einem geeigneten Tracedateninterface bereitgestellt.

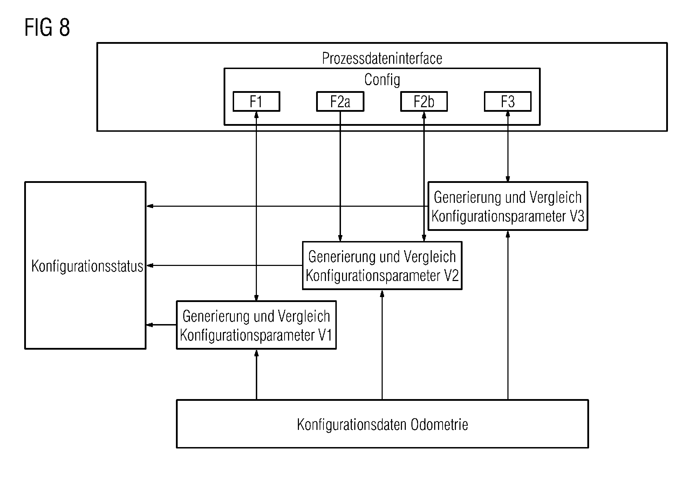

Konfigurationsdaten CONFIG werden gemäß Figur 5 in Verbindung mit Figur 8 über alle vier Schnittstellen F1, F2a, F2b und F3 des Prozessdateninterfaces ausgetauscht. Dabei erfolgt die Übergabe von Konfigurationsdaten an die Vorverarbeitungsbaugruppen V1, V2 und V3 über die Schnittstellen F1, F2b und F3, während das Rücklesen der Konfigurationsdaten der Vorverarbeitungsbaugruppen V1, V2 und V3 im sicheren Rechner über alle vier Schnittstellen F1, F2a, F2b und F3 vorgesehen ist. Damit wird für die sicherheitsrelevante Konfigurierbarkeit der Vorverarbeitungsbaugruppen V1, V2, V3 zusätzlich eine Ausfalltoleranz durch mehrkanaliges Rücklesen erreicht. Bei Ausfall von beispielsweise Vorverarbeitungsbaugruppe V2 können weiterhin Konfigurationsdaten aus den Schnittstellen F1 und F3 zurück gelesen werden, womit beide Rechnerkanäle A und B an der Auswertung beteiligt sind.

Für Echtzeitanwendungen sind zur Synchronisierung zwischen sicherem Rechner und Vorverarbeitungsbaugruppen V1, V2, V3 zusätzliche Verschaltungen vorgesehen. Die Synchronisationseingänge I/T-SYNC von zwei V1 und V3 der drei Vorverarbeitungsbaugruppen V1, V2 und V3 sind jeweils mit Synchronisationsausgängen 01 der unterschiedlichen Rechnerkanäle A und B verbunden, wie beispielsweise Figur 1 zeigt. Die Sync-Schnittstelle T-SYNC der dritten Vorverarbeitungsbaugruppe V2 wird in unterschiedlicher Art und Weise an beide Rechnerkanäle A und B gekoppelt. Der Synchronisationseingang I dieser Vorverarbeitungsbaugruppe V2 ist einerseits mit einem Synchronisationsausgang 02 des einen Rechnerkanals A und andererseits mit einem Synchronisationseingang I1 des anderen Rechnerkanals B verbunden. Die an diese Vorverarbeitungsbaugruppe V2 ausgegebenen Synchronisationsinformationen des einen Rechnerkanals A können damit auch vom zweiten Rechnerkanal B eingelesen werden, wie auch Figur 4 zeigt.

Bei Verwendung von Busschnittstellen kann eine separate HW-Anschaltung, wie in Figur 2 dargestellt, für die Synchronisation entfallen, wenn die HW-Anschaltung gemäß Figur 3 ausgeführt werden kann, d. h. wenn sich das erfindungsgemäße Synchronisationsverfahren auf die Kommunikationsdienste des Bussystems abbilden lässt.

Die Synchronisation des Datenaustausches mit den Vorverarbeitungsbaugruppen V1, V2, V3 wird zentral durch den sicheren Rechner gesteuert. Mit der Ausgabe eines Triggersignals an die Sync-Schnittstelle T-SYNC der Vorverarbeitungsbaugruppen V1, V2, V3 fordert der sichere Rechner die zum Triggerzeitpunkt gültigen Nutzdaten an. Gemäß Hardwareverschaltung der 2:3-Kopplung (Fig. 1 bis 3) wird das Triggersignal 01/02 eines Rechnerkanals A an zwei Vorverarbeitungsbaugruppen V1 und V2 ausgegeben, während das Triggersignal 01 des zweiten Rechnerkanals B an die dritte Vorverarbeitungsbaugruppe V3 gesendet wird. Das an die zweite Vorverarbeitungsbaugruppe V2 ausgegebene Triggersignal 02 des ersten Rechnerkanals A wird vom zweiten Rechnerkanal B am Eingang I1 parallel eingelesen. Mit dem Einlesen des Triggersignals 02 erfolgt im zweiten Rechnerkanal B eine Kontrolle der Synchronität der ausgegebenen Triggersignale 01 und 02 des ersten und zweiten Rechnerkanals A und B - Sync-Check -, wie aus Figur 4 ersichtlich. Sollte ein Rechnerkanal A oder B Triggersignale fehlerhaft generieren oder interpretieren, wird dieses durch den Sync-Check offenbart und führt zu einer Sicherheitsreaktion im sicheren Rechner. Der Sync-Check prüft, ob die Triggersignale beider Rechnerkanäle A und B innerhalb eines festgelegten Zeitfensters eintreffen. Damit werden durch den Sync-Check Ausfälle von Triggersignalen, Abweichungen zwischen Triggersignalen über die festgelegte Toleranzgrenze sowie fehlerhafte Generierung von Triggersignalen offenbart. Die Festlegung der Toleranz zwischen den Triggersignalen beider Rechnerkanäle A, B erfolgt gemäß den Echtzeitanforderungen der Prozessteuerung und beeinflusst die Größe der Abweichung zwischen den Ergebnissen der Vorverarbeitungsbaugruppen V1, V2, V3. Daneben wird mit dem zulässigen Jitter das Fusionsergebnis im sicheren Rechner beeinflusst.

Auf den Empfang eines Triggersignals reagieren die Vorverarbeitungsbaugruppen V1, V2, V3 unmittelbar mit der Generierung der Nutzdaten.

Steuerungsprozesse erfordern oftmals die Änderung der Konfigurationsdaten von Vorverarbeitungsbaugruppen V1, V2, V3 Während der Laufzeit des Systems. Ein Beispiel dafür ist das Zurücksetzen von Wegzählern an Synchronpunkten. Dabei kann sich die Synchroninformation auf einen zurückliegenden Zeitpunkt beziehen, beispielsweise aufgrund der Verarbeitungszeit für das Ermitteln des Synchronpunktes im sicheren Rechner. Deshalb ist es für Echtzeitanwendungen nicht nur erforderlich, die Konfiguration der Vorverarbeitungsbaugruppe V1, V2, V3 während der Laufzeit des Systems ändern zu können, sondern auch einen Zeitpunkt für die Gültigkeit der neuen Konfigurationsdaten bestimmen zu können.

Für die echtzeitfähige Konfigurationen von Vorverarbeitungsbaugruppen V1, V2, V3 mit Synchronanforderung ist deshalb vorgesehen, neben den Nutzdaten auch den Zeitpunkt der Gültigkeit der Nutzdaten durch jede Vorverarbeitungsbaugruppe V1, V2, V3 mit an den sicheren Rechner auszugeben.

Die Ausgabe des Gültigkeits-Zeitpunktes von Nutzdaten erfolgt entsprechend der individuellen Systemzeit der Vorverarbeitungsbaugruppen V1, V2, V3. Der sichere Rechner speichert zu den empfangenen Nutzdaten der Vorverarbeitungsbaugruppen V1, V2, V3 jeweils deren Gültigkeits-Zeitpunkte. Damit verwaltet er zu den Sync-Zeitpunkten zusammen mit seiner eigenen Systemzeit vier unterschiedliche Zeitskalen. Die Sync-Zeitpunkte eignen sich damit als Bezugsgröße für die Konvertierung zwischen den unterschiedlichen Zeitskalen. Für Konfigurationsdaten mit Gültigkeits-Zeitpunkt wird anhand der gespeicherten Sync-Zeitpunkte durch den sicheren Rechner jeweils ein Gültigkeits-Zeitpunkt in der Zeitskala der Vorverarbeitungsbaugruppen V1, V2, V3 bestimmt. Dieser bezogen auf die Systemzeit der jeweiligen Vorverarbeitungsbaugruppe V1, V2, V3 ermittelte Zeitpunkt wird über die jeweilige Schnittstelle F1, F2a, F2b, F3 des Prozessdateninterfaces zusammen mit der Konfigurationsinformation an die jeweilige Vorverarbeitungsbaugruppe V1, V2, V3 übertragen.

In der Vorverarbeitungsbaugruppe V1, V2, V3 erfolgt dann die Resynchronisation auf die Konfigurationsinformation zum angegebenen Zeitpunkt. Die Vorverarbeitungsbaugruppe V1, V2, V3 muss, falls es sich um einen zurückliegenden Zeitpunkt handelt, eine Prozesshistorie bis zum zurückliegenden Zeitpunkt verwalten, um die Verarbeitung auf diesen Zeitpunkt synchronisieren zu können.

Eine aufwändige zeitliche Synchronisierung der Uhren zwischen sicherem Rechner und Vorverarbeitungsbaugruppen V1, V2, V3, bzw. den Vorverarbeitungsbaugruppen V1, V2, V3 untereinander, ist nicht erforderlich.

Inhalt, Menge und Codierung der Daten, sowie das verwendete Übertragungsprotokoll wird durch die erfindungsgemäße Rechnerkonfiguration für die zwischen dem sicheren Rechner und den Vorverarbeitungsbaugruppen V1, V2, V3 ausgetauschten Daten nicht festgelegt und kann daher bedarfsabhängig und flexibel gewählt werden.

Für Echtzeitanforderungen wird die Anwendung eines zeittransparenten Übertragungsprotokolls ohne Fehlerkorrektur empfohlen. Zur Offenbarung von Übertragungsfehlern eignet sich die Verwendung einer zyklischen Prüfsumme, beispielsweise CRC32, als Anhang für Nutzdatentelegramme.

Die weitere Verarbeitung der über das Prozessdateninterface in den sicheren Rechner gelieferten Nutzdaten kann abhängig vom Zustand der Vorverarbeitungsbaugruppen V1, V2, V3 erfolgen. Der Zustand der Vorverarbeitungsbaugruppen V1, V2, V3 wird durch die gelieferten Statusinformationen beschrieben, wie in Figur 6 dargestellt.

Wenn alle Vorverarbeitungsbaugruppen V1, V2, V3 intakt sind und verwendbaren Status signalisieren, können die Nutzdaten aller Vorverarbeitungsbaugruppen V1, V2, V3 weiterverarbeitet werden. In diesem Fall können die Daten der drei Schnittstellen F1, F2b und F3 des Prozessdateninterfaces weiter verwendet werden.

Bei Ausfall oder Nichtverwendbarkeit der Ergebnisse aus Vorverarbeitungsbaugruppe V1 und gleichzeitiger Verwendbarkeit der Nutzdaten aus Vorverarbeitungsbaugruppe V2 und V3 werden die Ergebnisse der Vorverarbeitungsbaugruppen V2 und V3 an den Schnittstellen F2b und F3 weiterverwendet.

Bei Ausfall oder Nichtverwendbarkeit der Ergebnisse aus Vorverarbeitungsbaugruppe V2 und gleichzeitiger Verwendbarkeit der Nutzdaten aus Vorverarbeitungsbaugruppe V1 und V3 werden die Ergebnisse der Vorverarbeitungsbaugruppen V1 und V3 an den Schnittstellen F1 und F3 weiterverwendet.

Bei Ausfall oder Nichtverwendbarkeit der Ergebnisse aus Vorverarbeitungsbaugruppe V3 und gleichzeitiger Verwendbarkeit der Nutzdaten aus Vorverarbeitungsbaugruppe V1 und V2 werden die Ergebnisse der Vorverarbeitungsbaugruppen V1 und V2 an den Schnittstellen F1 und F2b weiterverwendet.

Im Falle eines nichtverwendbaren oder ausgefallenen Status bei mehr als einer Vorverarbeitungsbaugruppe V1, V2, V3 kann keine mehrkanalige Verarbeitung stattfinden. Die weitere sichere Prozessverarbeitung muss in diesem Fall ausgesetzt oder abgebrochen werden und eine entsprechende Systemreaktion erfolgen.

Die Daten der verschiedenen Vorverarbeitungsbaugruppen V1, V2, V3 können individuell differieren, da ein geringer zeitlicher Versatz sowohl zwischen der Verarbeitung der Kanäle A und B des sicheren Rechners, als auch zwischen den Vorverarbeitungsbaugruppen V1, V2, V3 existiert - Jitter. Ein weiterer Grund für Abweichungen der Ergebnisse zwischen den Vorverarbeitungsbaugruppen V1, V2, V3 zu einem Zeitpunkt kann in unterschiedlich implementierten Algorithmen bestehen - diversitäre Vorverarbeitung. Daneben können unterschiedliche Sensoren für die Vorverarbeitung genutzt werden oder deren Daten an unterschiedlichen Messpunkten gewonnen werden.

Die Art und Weise der Verarbeitung der unterschiedlichen Daten der Vorverarbeitungsbaugruppen V1, V2, V3 wird durch eine Fusionsvorschrift festgelegt. Beispielsweise kann die Berechnung des Mittelwertes und der Streuung erfolgen. Anhand der Streuung kann die Qualität der Vorverarbeitung bewertet werden. Das Fusionsergebnis wird vom sicheren Rechner bewertet und für die weitere Verarbeitung genutzt.

Anhand des oben genannten Beispiels einer 2:3-Kopplung für sicherheitskritische Ortung wird die Wirkungsweise des erfindungsgemäßen Verfahrens im Folgenden näher dargestellt.

Die als Odometrieboards ausgebildeten Vorverarbeitungsbaugruppen V1, V2 und V3 besitzen eine serielle Datenschnittstelle SERIF in Figur 1 und einen Sync-Eingang T-SYNC für die 2:3-Kopplung mit dem zweikanalig sicheren Rechnersystem. Ein Rechnerkanal A des sicheren Rechners ist mindestens mit einer seriellen Baugruppe mit zwei Interfaces IF1 und IF2 und einer digitalen I/O-Baugruppe mit zwei Ausgängen 01 und 02 ausgerüstet. Der andere Rechnerkanal B des sicheren Rechners ist mindestens mit einer seriellen Baugruppe mit zwei Interfaces IF1 und IF2 und einer digitalen I/O-Baugruppe mit einem Eingang I1 und einem Ausgang 01 ausgerüstet. Die Odometrieboards V1, V2, V3 sind gemäß Figur 1 mittels 2:3-Kopplung mit dem sicheren Rechner Punkt-zu-Punkt verbunden.

Nach dem Systemstart erfolgt zunächst die Konfiguration der Vorverarbeitungsbaugruppen, d. h. der Odometrieboards V1 V2, V3, gemäß Figur 8. Der sichere Rechner sendet dazu die benötigten individuellen Konfigurationsdaten, wie beispielsweise Raddurchmesser für Wegimpulsgeber und Kalibrierfaktor für Radar, über die Schnittstellen F1, F2b und F3 an die Odometrieboards V1, V2 und V3, d. h. an die Vorverarbeitungsbaugruppen. Die Odometrieboards V1, V2, V3 übernehmen die Konfigurationsdaten und senden diese zurück an den sicheren Rechner. Im sicheren Rechner werden die eingestellten Konfigurationsparameter über die Schnittstellen F1, F2a, F2b und F3 des Prozessdateninterfaces empfangen und mit den Sollwerten verglichen. Weichen die Istwerte von den Sollwerten für ein Odometrieboard V1, V2, V3 voneinander ab, wird dieses Odometrieboard V1, V2, V3 für die weitere Verarbeitung suspendiert und dessen Daten verworfen. Bei Bedarf kann die Konfiguration zu einem späteren Zeitpunkt wiederholt werden, um das Odometrieboard V1, V2, V3 im Erfolgsfall erneut in die Fusion einzubinden. Weichen die Konfigurationen mehrerer Odometrieboards V1, V2, V3 voneinander ab, kann keine sichere Ortung erfolgen. Es kann nur weiterhin versucht werden, die Konfiguration zu wiederholen.

Bei Ausfall von Odometrieboard V1 werden die Konfigurationsdaten der Odometrieboards V2 und V3 über die Schnittstellen F2a und F3 zurückgelesen. Bei Ausfall von V2 erfolgt das Rücklesen über F1 und F3 und bei Ausfall von V3 über F1 und F2b. In jedem Fall sind also beide Rechnerkanäle A und B des sicheren Rechners an der Prüfung beteiligt, wodurch die Sicherheitsanforderungen an die Konfiguration abgedeckt werden.

Wird der für den Ortungsbetrieb erforderliche Konfigurationsstatus erreicht, kann die Ortungsfunktion in Betrieb genommen werden. Sobald sich das Fahrzeug bewegt, melden die Ortungssensoren gemessene Wege und Geschwindigkeiten an die Odometrieboards V1, V2, V3. In den Odometrieboards V1, V2, V3 werden die Sensordaten ausgewertet. Es werden fortlaufend der gefahrene Weg und die gefahrene Geschwindigkeit berechnet. Weiterhin werden fortlaufend Vertrauensintervalle bestimmt, innerhalb derer sich die ermittelten Odometriegrößen mit einer geforderten Wahrscheinlichkeit befinden. Der Ortungsalgorithmus in den Odometrieboards arbeitet unabhängig vom sicheren Rechner.

Der sichere Rechner fordert mit der Ausgabe von Triggersignalen die zum Zeitpunkt des Triggersignals gültigen Odometriedaten ODO (Figur 6) an. Das Triggersignal wird unter Beteiligung beider Kanäle A und B des sicheren Rechners an alle drei Odometrieboards V1, V2 und V3 ausgegeben. Infolge der 2:3-Kopplung wird das ausgegebene Triggersignal des ersten Rechnerkanals A durch den zweiten Rechnerkanal B wieder eingelesen. Mittels der Funktion T-Sync-Check (Figur 4) wird daraufhin im sicheren Rechner geprüft, ob die Ausgabe der Triggersignale an die Odometrieboards V1, V2, V3 ausreichend synchron erfolgt. Für die erfolgreiche Prüfung ist die ordnungsgemäße Mitwirkung beider Rechnerkanäle A und B erforderlich, wodurch fehlerhafte Synchronisierungen sicher offenbart werden. Im Fehlerfall leitet das System eine Sicherheitsreaktion, insbesondere eine Abschaltung, ein.

Die Odometrieboards V1, V2, V3 empfangen die Triggersignale des sicheren Rechners und reagieren daraufhin sofort mit der Ausgabe der Odometriedaten ODO an den sicheren Rechner. Dadurch wird die Forderung nach Echtzeitfähigkeit erüllt. Zusammen mit den Nutzdaten erfolgt die Ausgabe des aktuellen Zeitpunktes der Systemzeit des jeweiligen Odometrieboards V1, V2, V3.

Zusätzlich geben die Odometrieboards V1, V2, V3 Status- und Diagnosedaten an den sicheren Rechner aus. Anschließend wird boardintern mit der weiteren Berechnung aktueller Odometriedaten fortgesetzt.

Im Falle von drei funktionsfähigen Odometrieboards werden die Odometrie-Nutzdaten ODO über die Prozessschnittstellen F1, F2a, F2b und F3 des sicheren Rechners eingelesen. Sie sind gültig zum Zeitpunkt des zuletzt gesendeten Triggersignals.

Der mitgelieferte Zeitstempel der Odometrieboards V1, V2, V3 wird zusammen mit dem Zeitstempel der Systemzeit des sicheren Rechners zum Zeitpunkt der Ausgabe des Triggersignals abgespeichert. Dieser Synchronpunkt ist ggf. Basis für spätere Resynchronisation der Odometrieboards V1, V2, V3 durch den sicheren Rechner.

Ist ein Odometrieboard V1, V2, V3 ausgefallen oder in einem nichtverwendbaren Status, werden die Daten der jeweils verbleibenden funktionsfähigen Odometrieboards V1, V2, V3 verwendet. Bei Ausfall von V1 erfolgt das Einlesen über F2a und F3, bei Ausfall von V2 über F1 und F3 und bei Ausfall von V3 über F1 und F2b. Damit ist sichergestellt, dass in jedem Fall das Einlesen der Nutzdaten in den sicheren Rechner über beide Kanäle A und B erfolgt, so dass eine sichere Fehlererkennung möglich ist.

Die Statusdaten STATUS der Odometrieboards V1, V2 und V3 werden gemäß Figur 6 aus den Schnittstellen F1, F2b und F3 des Prozessdateninterfaces eingelesen. Sie dienen im sicheren Rechner der Auswahl der Fusionsvorschrift entsprechend dem Zustand der Odomdetrieoards. Ist ein Odometrieboard ausgefallen oder in einem nicht verwendbaren Zustand, wird anhand der Statuskennung eine Fusionsstrategie genutzt, die nur auf die Nutzdaten ODO der anderen funktionsfähigen Odometrieboards V1, V2, V3 zurückgreift. Bei einem mangelhaften Status von mehr als einem Odometrieboard erfolgt eine Sicherheitsreaktion im System, insbesondere eine Abschaltung.

Diagnosedaten der Odometrieboards werden gemäß Figur 9 differenziert weiterverarbeitet. Die Diagnosedaten werden hinsichtlich ausgefallener Komponenten analysiert - KTE-Diagnose. Diese Daten werden einer zentralen Fahrzeugdiagnose mit Zugang für das Wartungspersonal verfügbar gemacht. Daneben erfolgt die Speicherung von Zustands- und Tracedaten für Zwecke der Systembeobachtung und Fehlerverfolgung in einem boardeigenen Massenspeicher.

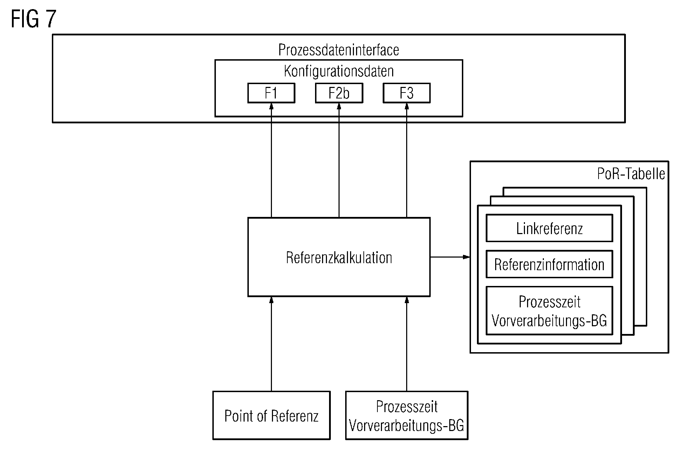

Figur 7 zeigt eine schematische Darstellung einer Referenzkalkulation. Bei der Fahrt passiert das Fahrzeug Referenzpunkte an der Strecke, beispielsweise Balisen - elektronische Kilometersteine. Mittels der Referenzinformationen können die Vertrauensintervalle für die Wegmessung als Maß für die kumulative Ortsunsicherheit resynchronisiert werden. Die Ortsreferenzinformation liegt im sicheren Rechner nach einer entsprechenden Verarbeitungszeit für das Einlesen und Dekodieren der Balisentelegramme vor. Für Synchronisierungszwecke ist es daher erforderlich, den Ort und den Zeitpunkt der Gültigkeit des Referenzpunktes zu berücksichtigen.

Der im sicheren Rechner gemäß eigener Systemzeit bestimmte Zeitpunkt der Gültigkeit des Referenzpunktes wird für jedes Odometrieboard V1, V2, V3 in dessen lokale Systemzeit umgerechnet. Die Umrechnung erfolgt durch Extrapolation auf Basis des letzten Sync-Zeitpunktes, zu welchem die Odometrieboards V1, V2, V3 Nutzdaten ODO und Systemzeit geliefert haben.

Der sichere Rechner gibt die Referenzinformation zusammen mit dem Gültigkeitszeitpunkt, umgerechnet auf die Systemzeit des jeweiligen Odometrieboards V1, V2, V3, als Konfigurationsdaten an die Odometrieboards V1, V2, V3 aus.

In den Odometrieboards werden die Referenzinformation und der Gültigkeitszeitpunkt für die Resynchronisation ausgewertet. Das Wegvertrauensintervall wird am zurückliegenden Referenzort zurückgesetzt und die Differenz zum aktuell aufgelaufenen Vertrauensintervall bestimmt. Dazu muss in den Odometrieboards V1, V2, V3 der Verlauf der Odometriedaten ODO kontinuierlich innerhalb eines Zeitfensters gespeichert und nachgeführt werden.

Die Konfigurationseinstellung wird von den Odometrieboards V1, V2, V3 zurück an den sicheren Rechner gemeldet. Dieser prüft mittels mehrkanaligem Rücklesen der Konfigurationsdaten, ob die Konfiguration fehlerfrei erfolgte.

## Patentansprüche

1. Rechnerkonfiguration zur Hardware-Kopplung von drei Vorverarbeitungsbaugruppen (V1, V2, V3), insbesondere Sensoren, mit zwei Rechnerkanälen (A, B) eines sicheren Rechners, **dadurch gekennzeichnet, dass** die Vorverarbeitungsbaugruppen (V1, V2, V3) Datenschnittstellen (SERIF, BUSIF) und Synchronisationseingänge (I/T-SYNC) aufweisen, welche mit Datenschnittstellen (IF1, IF2) und Synchronisationsschnittstellen (O1, O2; I1, O1) der beiden Kanäle (A, B) derart verbunden sind, dass auch bei Ausfall einer beliebigen Vorverarbeitungsbaugruppe (V1, V2, V3) für die Verarbeitung im sicheren Rechner immer die Ergebnisse von mindestens zwei Vorverarbeitungsbaugruppen (V1, V2, V3) unter Beteiligung von beiden Kanälen (A, B) des sicheren Rechners zur Verfügung stehen.

2. Rechnerkonfiguration nach Anspruch 1, **dadurch gekennzeichnet, dass** die Datenschnittstellen (SERIF, BUSIF) von zwei (V1, V3) der drei Vorverarbeitungsbaugruppen (V1, V2, V3) mit jeweils einer Datenschnittstelle (IF1, IF2) der beiden Kanäle (A, B) verbunden sind und dass die Datenschnittstelle (SERIF, BUSIF) der dritten Vorverarbeitungsbaugruppe (V2) mit den Datenschnittstellen (IF1, IF2) beider Kanäle (A, B) verbunden ist.

3. Rechnerkonfiguration nach einem der vorangehenden Ansprüche,
**dadurch gekennzeichnet, dass** die Vorverarbeitungsbaugruppen (V1, V2, V3) mit den Kanälen (A, B) des sicheren Rechners über Punkt-zu-Punkt-Verbindungen oder Bus-Verbindungen gekoppelt sind.

4. Rechnerkonfiguration nach einem der vorangehenden Ansprüche,
**dadurch gekennzeichnet, dass** dass die Datenschnittstellen (IF1, IF2) der Kanäle (A, B) des sicheren Rechners als serielle Schnittstellen oder als Busschnittstellen ausgebildet sind und dass ein Kanal (A) zwei Synchronisationsausgänge (01, 02) und der andere Kanal (B) einen Synchronisationsausgang (01) und einen Synchronisationseingang (I1) aufweist.

5. Rechnerkonfiguration nach einem der vorangehenden Ansprüche,
**dadurch gekennzeichnet, dass** der sichere Rechner ein Prozessdateninterface mit vier Schnittstellen (F1, F2a, F2b, F3) aufweist, wobei drei Schnittstellen (F1, F2b, F3) lesend und schreibend und eine Schnittstelle (F2a) nur lesend ausgebildet sind.

6. Rechnerkonfiguration nach Anspruch 5, **dadurch gekennzeichnet, dass**
über alle Schnittstellen (F1, F2a, F2b, F3) Nutzdaten an den sicheren Rechner übertragbar sind,
über die lesenden und schreibenden Schnittstellen (F1, F2b, F3) Status- und Diagnosedaten an den sicheren Rechner übertragbar sind,
über alle Schnittstellen (F1, F2a, F2b, F3) Konfigurationsdaten an den sicheren Rechner übertragbar sind und über die lesenden und schreibenden Schnittstellen (F1, F2b, F3) Konfigurationsdaten an die Vorverarbeitungsbaugruppen (V1, V2, V3) übertragbar sind.

7. Rechnerkonfiguration nach Anspruch 6,
**dadurch gekennzeichnet, dass** der sichere Rechner Mittel zur Auswahl einer Fusionsvorschrift der mehrkanalig übertragenen Nutzdaten in Abhängigkeit von den Statusdaten der Vorverarbeitungsbaugruppen (V1, V2, V3) aufweist.

8. Rechnerkonfiguration nach einem der vorangehenden Ansprüche,
**dadurch gekennzeichnet, dass** der sichere Rechner Mittel zur Erzeugung von Triggersignalen zur Generierung und Ausgabe von Nutzdaten an den sicheren Rechner derart aufweist, dass die Vorverarbeitungsbaugruppen (V1, V2, V3) zusammen mit den Nutzdaten ihre individuelle Systemzeit ausgeben.

9. Rechnerkonfiguration nach Anspruch 8,
**dadurch gekennzeichnet, dass** eine mehrkanalige Prüfung der Triggersignale des sicheren Rechners vorgesehen ist, wobei das ausgegebene Triggersignal des einen Rechnerkanals (A) vom anderen Rechnerkanal (B) zurück gelesen wird.

10. Rechnerkonfiguration nach einem der Ansprüche 6 bis 9,
**dadurch gekennzeichnet, dass** eine mehrkanalige Prüfung der Konfigurationsdaten der Vorverarbeitungsbaugruppen (V1, V2, V3) vorgesehen ist, wobei die Konfigurationsdaten zurück gelesen und verglichen werden.

11. Rechnerkonfiguration nach einem der Ansprüche 6 bis 10,
**dadurch gekennzeichnet, dass** die Konfigurationsdaten der Vorverarbeitungsbaugruppen (V1, V2, V3) während der Laufzeit änderbar sind, indem neue Konfigurationsdaten an die Vorverarbeitungsbaugruppen (V1, V2, V3) übermittelt werden, deren Gültigkeitszeitpunkte innerhalb einer individuellen Systemzeit der Vorverarbeitungsbaugruppen (V1, V2, V3) mit übergeben werden, wobei die individuelle Systemzeit aus der aktuellen Systemzeit durch Extrapolation auf den Synchronisationszeitpunkt der zuletzt angeforderten Nutzdaten ermittelbar ist.
